# EUROPÄISCHE PATENTSCHRIFT

(11) **EP 1 777 881 B1**
(45) Veröffentlichungstag und Bekanntmachung des Hinweises auf die Patenterteilung: **01.09.2010**
(21) Anmeldenummer: 06120189.3
(22) Anmeldetag: 06.09.2006
(51) Int. Cl.: H04W 64/00

(54) **Verfahren zur selektiven Bereitstellung eines Dienstes innerhalb eines Reichweitebereichs einer Basisstation sowie Dienstbereitstellungseinheit mit einer Basisstation**
Method for selectively providing a service within the range of a base station and service provisioning unit with a base station
Procédé pour l'attribution sélective d'un service dans la couverture d'une station de base et unité de fourniture de services avec une station de base

(30) Priorität: 24.10.2005 DE 102005050789
(43) Veröffentlichungstag der Anmeldung: 25.04.2007
(73) Patentinhaber: ROBERT BOSCH GMBH, 70442 Stuttgart (DE)
(72) Erfinder: Hinrichs, Andreas, 31199, Diekholzen (DE); Vogel, Peter, 31139, Hildesheim (DE); May, Thomas, 38302, Wolfenbuettel (DE); Hornburg, Bjoern, 31188, Holle (DE); Yang, Yiwen, 31141, Hildesheim (DE)

(56) Entgegenhaltungen:
- EP-A- 1 388 974
- EP-A- 1 523 154
- WO-A-03/047286
- WO-A-2004/060008
- US-A1- 2002 022 488
- US-A1- 2002 062 251

## Beschreibung

### Stand der Technik

Die Erfindung betrifft ein Verfahren zur selektiven Bereitstellung eines Push-Dienstes innerhalb eines Funkreichweitebereichs einer Basisstation. Die Erfindung betrifft weiterhin eine Dienstbereitstellungseinheit zum selektiven Bereitstellen eines Push-Dienstes an eine mobile Einheit sowie ein Dienstbereitstellungssystem mit einer solchen Dienstbereitstellungseinheit.

Funktechnologien zur spontanen Vernetzung von Geräten in dem jeweiligen Funkreichweitebereich und zur Bereitstellung von Diensten befinden sich seit einigen Jahren im Einsatz. Hierunter fallen z.B. die Technologien Bluetooth und IEEE 802.11 (WLAN). Diese Technologien ermöglichen auch eine eindeutige Identifikation der Geräte z.B. bei Bluctooth anhand einer 48-Bit-Adresse und bei WLAN anhand einer eindeutigen MAC-Adresse.

Soll ein Dienst als Push-Dienst bereitgestellt werden, so ist eine Selektion der sich in dem Funkreichweitenbereich befindlichen Geräte bislang nicht möglich, so dass der Push-Dienst in der Regel allen in dem Funkreichweitebereich befindlichen Geräten bereitgestellt wird. Unter einem Push-Dienst versteht man einen Dienst, der selbstständig, d.h. ohne Nachfragen beim Benutzer des Geräts einen Dienst bereitstellt, z.B. eine Sprachverbindung aufbaut oder Nachrichten oder sonstige Daten dem Gerät bereitstellt.

Bislang können solche Push-Dienste jedem Gerät innerhalb des Funkreichweitebereichs bereitgestellt werden, eine Selektion der Geräte innerhalb des Funkreichwertebereichs ist jedoch nicht bekannt. So ist vorab nicht bekannt, welche Benutzer der Geräte den Push-Dienst erhalten möchten und welche nicht.

Aus EP 1388974 A1 ist ein Verfahren und eine Vorrichtung zum Bereitstellen von Informationen über die reale Welt bekannt. Dabei werden ein Service-System und eine mobile Einheit verwendet, die miteinander in Verbindung stehen. Die mobile Einheit ist ausgebildet, um virtuelle Marker in dem Service-System zu hinterlegen, wenn sich die mobile Einheit in der realen Welt bewegt. Abhängig von der Position der mobilen Einheit und der hinterlegten Marker werden der mobilen Einheit von der Service-Station Informationen über die reale Welt übermittelt.

Aus WO 2004/060008 A1 ist ein Verfahren zum Aufbau einer W-Lan-Verbindung zwischen einer Basisstation und einer mobilen Einheit bekannt. Dabei wird die Position der mobilen Einheit überwacht und eine W-Lan-Verbindung zwischen der Basisstation und der mobilen Einheit aufgebaut, wenn sich die mobile Einheit innerhalb eines festgelegten geographischen Bereiches befindet.

Es ist Aufgabe der vorliegenden Erfindung, ein Verfahren zur selektiven Bereitstellung eines Push-Dienstes zur Verfügung zu stellen, mit dem innerhalb eines Reichweitebereichs einer Basisstation ein Push-Dicnst selektiv einem bestimmten Gerät zur Verfügung gestellt werden kann.

Es ist weiterhin Aufgabe der vorliegenden Erfindung, eine Dienstbereitstellungseinheit zur Verfügung zu stellen, die einen Push-Dienst selektiv an eine mobile Einheit innerhalb eines Reichweitebereichs einer Basisstation bereitstellt.

Diese Aufgabe wird durch das Verfahren nach Anspruch 1, die Dienstbereitstellungseinheit nach Anspruch 7 sowie das Dienstbereitstellungssystem nach Anspruch 10 gelöst.

Weitere vorteilhafte Ausgestaltungen der Erfindung sind in den abhängigen Ansprüchen angegeben.

Gemäß einem ersten Aspekt der vorliegenden Erfindung ist ein Verfahren zur selektiven Bereitstellung eines Push-Dienstes innerhalb eines Reichweitebereichs einer oder mehrerer Basisstationen vorgesehen. Das Verfahren umfasst das Ermitteln der Position einer mobilen Einheit innerhalb des Reichweitebercichs der Basisstation und des selektiven Bereitstellens des Push-Dienstes an die mobile Einheit abhängig von der ermittelten Position.

Das erfindungsgemäße Verfahren hat den Vorteil, dass ein selbsttätig den mobilen Einheiten bereitgestellter Push-Dienst nur dann einer mobilen Einheit bereitgestellt wird, wenn sich diese innerhalb eines bestimmten räumlichen Bereichs, der innerhalb des Reichweitebereichs definiert ist, befindet, so dass der Benutzer der mobilen Einheit auswählen kann, ob ihm der Push-Dienst bereitgestellt wird oder nicht, je nachdem, ob er sich an einer bestimmten Position befindet oder nicht. Dadurch kann vermieden werden, dass weitere mobile Einheiten, die sich nicht an der vorbestimmten Position befinden; den Push-Dienst erhalten, weil diese beispielsweise nicht dafür autorisiert sind oder denen ein Push-Dienst nicht bereitgestellt werden soll, damit die Benutzer der betreffenden mobilen Einheiten nicht gestört werden.

Gemäß einer weiteren Ausführungsform der Erfindung wird ein Dienstbereich innerhalb des Reichweitebereichs definiert, indem der Dienst bereitgestellt werden soll, wobei der Push-Dienst an die mobile Einheit bereitgestellt wird, wenn sich die mobile Einheit in dem Dienste-Bereich befindet. Alternativ kann der Push-Dienst an die mobile Einheit bereitgestellt werden, wenn sich die mobile Einheit in den Dienste-Bereich bewegt. Im letztgenannten Fall dient der Eintritt in den Dienste-Bereich dazu, das Bereitstellen des Dienstes auszulösen, im Sinne eines Triggers. Vorzugsweise wird zum Bereitstellen des Push-Dienstes eine Datenkommunikationsverbindung, insbesondere eine Bluetooth-Verbindung zwischen der Basisstation und der mobilen Einheit aufgebaut.

Gemäß einer bevorzugten Ausführungsform wird die Position der mobilen Einheit mithilfe eines Triangulationsverfahrens oder eines Trilaterationsverfahrens durchgeführt. Der Dienst kann eine Datenverbindung, eine Video- und/oder Audioverbindung oder eine Programmdatenverbindung umfassen. Jeder dieser Dienste kann auch als Push-Dienst bereitgestellt werden.

Gemäß einem weiteren Aspekt der vorliegenden Erfindung ist eine Dienstbereitstellungseinheit vorgesehen, um einer mobilen Einheit einen Push-Dienst selektiv bereitzustellen. Die Dienstbereitstellungseinheit umfasst eine Basisstation mit einer

Bereitstellungseinheit zum Bereitstellen des Push-Dienstes innerhalb eines Reichweitebereichs. Ferner ist eine Positionsermittlungseinheit vorgesehen, um eine Position der mobilen Einheit innerhalb des Reichweitebereichs zu bestimmen. Die Basisstation ist gestaltet, um den Dienst der mobilen Einheit abhängig von ihrer Position bereitzustellen.

Vorzugsweise kann eine Auswahleinheit in der Basisstation vorgesehen sein, um einen Dienste-Bereich zu definieren, in dem der Push-Dienst bereitgestellt werden soll und um mithilfe der Bereitstellungseinheit den Dienst an die mobile Einheit bereitzustellen, wenn sich die mobile Einheit in dem Dienste-Bereich befindet oder in diesen gelangt ist.

Vorzugsweise kann die Bereitstellungseinheit eine Sendeeinrichtung, insbesondere eine Bluetooth-Sendeeinrichtung umfassen.

Gemäß einer weiteren Ausführungsform der Erfindung kann die Positionsermittlungseinheit mehrere verteilt angeordnete Positionsdetektoren und eine Auswerteeinheit aufweisen, um die Position der mobilen Einheit, insbesondere mithilfe eines Triangulationsverfahrens oder eines Trilaterationsverfahrens zu ermitteln.

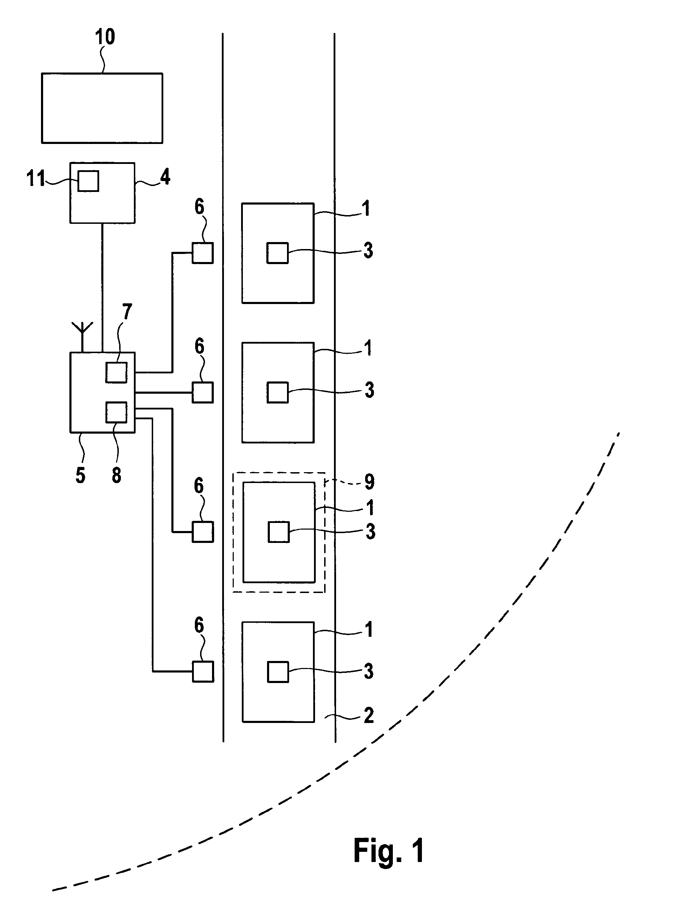

Bevorzugte Ausführungsformen der Erfindung werden nachfolgend anhand der beigefügten Zeichnung näher erläutert.

Die einzige Figur zeigt ein mögliches Ausführungsbeispiel für das erfindungsgemäße Verfahren bzw. für das erfindungsgemäße Dienstbereitstellungssystem. Gezeigt ist eine schematische Draufsicht auf ein Drive-in-Geschäft, bei dem sich ein Benutzer mit seinem Fahrzeug 1 auf eine Drive-in-Fahrspur 2 begibt. Mindestens eines der Fahrzeuge 1 ist mit einer mobilen Einheit 3, z.B. einer WLAN- oder Bluetooth-fähigen Sende-Empfangseinrichtung ausgerüstet, über die ein Dienst der mobilen Einheit 3 in dem Fahrzeug 1 bereitgestellt werden kann. In dem gezeigten Ausführungsbeispiel kann der Dienst beispielsweise der Aufbau einer Gesprächsverbindung zwischen einem Benutzer des Fahrzeugs 1 und einem Verkäufer des Drive-in-Geschäftes sein, der sich an einem Kommunikationsendgerät 4 befindet, und der über dieses mit dem Insassen des Fahrzeugs 1 in Kontakt treten kann. Die Gesprächsverbindung könnte beispielsweise über eine Freisprecheinrichtung in dem Fahrzeug 1 erfolgen. Der Aufbau der Gesprächsverbindung kann selbsttätig erfolgen, d.h. ohne Zutun des Verkäufers und/oder des Benutzer des Fahrzeugs 1.

In der Figur sind vier Fahrzeuge dargestellt, die sich üblicherweise alle gleichzeitig in dem Reichweitebereich einer Basisstation 5 befinden, über die der Dienst der mobilen Einheit 3 in dem Fahrzeug 1 bereitgestellt wird. Die mobile Einheit 3 sendet regelmäßig oder kontinuierlich Signale, die es ermöglichen, die Position der mobilen Einheit 3 zu bestimmen.

Die Positionsbestimmung erfolgt vorzugsweise über ein Triangulationsverfahren, ein Trilaterationsverfahren oder über ein anderes aus dem Stand der Technik hinreichend bekanntes Verfahren. Im dargestellten Ausführungsbeispiel sind zur Positionsbestimmung vier Positionsdetektoren 6 vorgesehen, die entlang der Fahrspur angeordnet sind und die es ermöglichen, die Position der mobilen Einheiten 3 in den Fahrzeugen 1, und damit die Position der Fahrzeuge 1, genau zu bestimmen. Die Positionsdetektoren 6 stehen mit der Basisstation 5 in Verbindung und übermitteln empfangene Positionsdaten, z.B. Laufzeiten der von den mobilen Einheiten ausgesendeten Signale, deren Identifikationsdaten, bei Bluetooth z.B. die typische 48-Bit-Adresse und dgl., so dass eine in der Basisstation 5 vorgesehene Auswerteeinheit 7 die Position des Fahrzeugs ermitteln und dieses identifizieren kann. Alternativ kann die mobile Einheit 3 ihre Position selbst bestimmen, z.B. über ein GPS-Verfahren und die ermittelte Position selbsttätig an die Basisstation 5 übermitteln.

Durch die Identifikation der mobilen Einheit 3 kann nun ein Dienst gezielt einem bestimmten Fahrzeug an einer bestimmten Position bereitgestellt werden, z.B. kann eine Gesprächsverbindung selbsttätig aufgebaut werden. Die Position kann beispielsweise mit einem in einer Auswahleinheit 8 definierten Dienste-Bereich 9 verglichen werden, so dass der Dienst der mobilen Einheit 3 in dem Fahrzeug 1 nur dann bereitgestellt wird, wenn sich die mobile Einheit 3 innerhalb des durch die Auswahleinheit 8 definierten Dienste-Bereichs 9 befindet.

Im dargestellten Ausführungsbeispiel kann die Gesprächsverbindung dann genutzt werden, eine Bestellung aufzugeben, so dass während des weiteren Fahrens des Fahrzeugs 1 auf der Fahrspur 2 die Bestellung vorbereitet werden kann. Der Benutzer kann die bestellten Waren an einer Ausgabestation 10 in Empfang nehmen, sobald das Fahrzeug 1 bis dorthin vorgerückt ist. Der Aufbau der Gesprächsverbindung zwischen dem Insassen des Fahrzeugs 1 und dem Verkäufer kann erfolgen, sobald die mobile Einheit 3 in den Dienste-Bereich 9 gelangt, und beendet werden, sobald die mobile Einheit den Dienste-Bereich 9 verlässt. So kann beispielsweise der Dienst bereitgestellt werden, solange sich die mobile Einheit 3 des Fahrzeugs 1 in dem Dienste-Bereich 9 aufhält.

Alternativ und zusätzlich kann auch vorgesehen sein, dass der Dienst bereitgestellt wird, wenn sich die mobile Einheit 3 des Fahrzeugs 1 in den Dienste-Bereich 9 bewegt und beendet werden, wenn entweder der Benutzer des Fahrzeugs 1 und/oder der Verkäufer die Gesprächsverbindung manuell unterbricht.

Innerhalb des Reichweitebereichs der Basisstation 5 können mehrere solcher Dienste-Bereiche bereitgestellt werden. So kann beispielsweise zu Beginn der Fahrspur 2 ein erster Dienste-Bereich definiert sein. Gelangt das Fahrzeug in den ersten Dienste-Bereich, wird eine Datenverbindung zwischen der mobilen Einheit und dem Kommunikationsendgerät 4 aufgebaut, durch die das Kommunikationsendgerät 4 der mobilen Einheit 3 eine Warenübersicht oder eine sonstige Auswahlinformation übermittelt. Die Warenübersicht wird beispielsweise auf einer Anzeigeeinheit (nicht gezeigt) in dem Fahrzeug 1, z. B. integriert in einem Bord-Computer, angezeigt, so dass sich der Benutzer des Fahrzeugs 1 überlegen kann, welche Waren er bestellen möchte oder nicht. Beim weiteren Vorfahren des Fahrzeugs verlässt die mobile Einheit 3 nun den ersten Dienste-Bereich, in dem der mobilen Einheit 3 des Fahrzeugs 1 die Warenübersicht bereitgestellt wurde und gelangt beim weiteren Vorfahren nun in den zweiten Dienste-Bereich, in dem automatisch eine Gesprächsverbindung aufgebaut wird. Dort kann der Benutzer des Fahrzeugs nun basierend auf der verfügbaren Warenübersicht, die dieser auf der fahrzeuginternen Anzeigeeinheit sieht, seine Bestellung aufgeben.

Die Position der mobilen Einheiten 3 kann laufend neu ermittelt werden und kann daher auch bei einer Veränderung nachvollzogen werden. Das Kommunikationsendgerät 4 kann eine Anzeigeeinheit 11 aufweisen, die beispielsweise eine grafische Darstellung der sich in der Schlange befindlichen mobilen Einheiten und deren Position anzeigt. Dabei kann das Kommunikationsendgerät in der Lage sein, der Auswahleinheit 8 eine Information über einen neuen Dienste-Bereich bereitzustellen, so dass über das Kommunikationsendgerät 4 der Verkäufer gezielt eines der Fahrzeuge auswählen kann, indem er Informationen über den Ort, an dem sich das Fahrzeug befindet, an die Auswahleinheit 8 sendet. Damit ist es dem Verkäufer möglich, durch einfaches Auswählen eines der Fahrzeuge mithilfe der Anzeigeeinheit 11 bzw. geeigneten Eingabegeräts eines der Fahrzeuge auszuwählen und automatisch eine Gesprächsverbindung herzustellen, ohne dass der Benutzer des ausgewählten Fahrzeugs die Annahme des Gesprächs bestätigen muss.

In den zuvor beschriebenen Ausführungsformen umfassen die mobilen Einheiten 3 eine Bluetooth-Einrichtung, um eine Bluetooth-Datenverbindung zur Basisstation 5 aufzubauen. Anstelle der Bluetooth-Einrichtung kann die mobile Einheit 3 sowie die Basisstation 3 so aufgebaut sein, dass über eine WLAN-Verbindung der Dienst bereitgestellt wird. Auch bei WLAN ist es möglich, über die eindeutige MAC-Adresse der mobilen Einheit 3 die mobile Einheit 3 und darüber das Fahrzeug 1 eindeutig zu identifizieren, solange es sich in dem Reichweitebereich der Basisstation 5 befindet.

Im Allgemeinen ist bei der Erfindung vorgesehen, dass innerhalb eines Reichweitebereichs einer Basisstation 5 einer oder mehreren ausgewählten mobilen Einheiten bereitgestellt wird. Das Auswählen der mobilen Einheit, der der Dienst bereitgestellt wird, erfolgt über die Position der mobilen Einheit, die über ein geeignetes Positionsermittlungssystem, z.B. mithilfe des Triangulationsverfahrens oder dgl. die Position der mobilen Einheit 3 ermittelt und abhängig von der Position bzw. davon, ob die Position innerhalb eines vordefinierten Dienste-Bereichs liegt, den Dienst dieser mobilen Einheit bereitzustellen und anderen innerhalb des Reichweitebereichs befindlichen mobilen Einheiten den Dienst nicht bereitzustellen, wenn sie sich auf einer anderen Position bzw. außerhalb des Dienste-Bereichs befinden.

Der bereitgestellte Dienst kann jede Art von unidirektionaler und bidirektionaler Datenkommunikation umfassen, wie beispielsweise eine Gesprächsverbindung, ein Bereitstellen von Daten wie beispielsweise Programmdaten, Benutzerdaten, Video- und Audiodaten, Bilddaten sowie sonstige Informationsdaten sein. Die Gesprächsverbindung kann zwischen der Basisstation und der mobilen Einheit und/oder zwischen zwei mobilen Einheiten hergestellt werden, die über die Basisstation 5 vermittelt wird. Jeder dieser Dienste kann der mobilen Einheit 3 selbsttätig als sog. Push-Dienst bereitgestellt werden, wenn sich die mobile Einheit innerhalb des Dienste-Bereichs befindet oder in diesen gelangt. Weiterhin können beispielsweise eine Gesprächsverbindung mit der Basisstation bzw. mit einer weiteren mobilen Einheit automatisch aufgebaut werden, ohne dass die Benutzer der mobilen Einheit die Annahme der Gesprächsverbindung bestätigen müssen. So kann beispielsweise innerhalb eines Reichweitebereichs einer Basisstation zwei oder mehrere Dienste-Bereiche definiert werden, wobei zwischen den sich in den Dienste-Bereichen befindlichen mobilen Einheiten eine Gesprächsverbindung automatisch aufgebaut wird. Dies kann beispielsweise auch zwischen mehreren Reichweitenbereichen von mehreren Basisstationen hinweg erfolgen.

## Patentansprüche

1. Verfahren zur selektiven Bereitstellung eines Push-Dienstes innerhalb eines Reichweitebereichs einer Basisstation (5), mit folgenden Schritten:
- Ermitteln der Position einer mobilen Einheit (3) innerhalb des Reichweitebereichs der Basisstation (5);
- Bereitstellen des Push-Dienstes an die mobile Einheit (3) abhängig von der ermittelten Position,
wobei aufgrund des Push-Dienstes automatisch eine Gesprächsverbindung zwischen der Basisstation (5) und der mobilen Einheit (3) oder eine Gesprächsverbindung zwischen zwei mobilen Einheiten (3) in dem Reichweitebereich aufgebaut wird.

2. Verfahren nach Anspruch 1, wobei ein Dienste-Bereich (9) innerhalb des Reichweitebereiches definiert wird, in dem der Push-Dienst bereitgestellt werden soll, wobei der Push-Dienst an die mobile Einheit (3) bereitgestellt wird, wenn sich die mobile Einheit (3) in dem Dienste-Bereich befindet.

3. Verfahren nach Anspruch 1, wobei ein Dienste-Bereich (9) innerhalb des Reichweitebereiches definiert wird, in dem der Push-Dienst bereitgestellt werden soll, wobei der Push-Dienst an die mobile Einheit (3) bereitgestellt wird, wenn die mobile Einheit (3) in den Dienste-Bereich (9) gelangt.

4. Verfahren nach einem der Ansprüche 1 bis 3, wobei zum Bereitstellen des Push-Dienstes eine Datenkommunikationsverbindung, insbesondere eine Bluetooth-Verbindung, zwischen der Basisstation (5) und der mobilen Einheit (3) aufgebaut wird.

5. Verfahren nach einem der Ansprüche 1 bis 4, wobei die Position mithilfe eines Triangulationsverfahrens durchgeführt wird.

6. Verfahren nach einem der Ansprüche 1 bis 5, wobei der Push-Dienst mindestens einen der folgenden Dienste umfasst: eine Datenverbindung, eine Video- und/oder Audioverbindung, und eine Programmdatenverbindung.

7. Dienstbereitstellungseinheit zum selektiven Bereitstellen eines Push-Dienstes, an eine mobile Einheit (3), umfassend:
- eine Basisstation (5) mit einer Bereitstellungseinheit zum Bereitstellen des Dienstes innerhalb eines Reichweitebereichs;
- eine Positionsermittlungseinheit (6, 7) zum Bestimmen einer Position der mobilen Einheit (3) innerhalb des Reichweitebereichs;
wobei die Basisstation (5) gestaltet ist, um den Push-Dienst der mobilen Einheit (3) abhängig von ihrer Position bereitzustellen, wobei der Push-Dienst ausgebildet ist automatisch eine Gesprächsverbindung zwischen der Basisstation (5) und der mobilen Einheit (3) oder eine Gesprächsverbindung zwischen zwei mobilen Einheiten (3) in dem Reichweitebereich aufzubauen.

8. Dienstbereitstellungseinheit nach Anspruch 7, wobei eine Auswahleinheit (8) in der Basisstation (5) vorgesehen ist, um einen Dienste-Bereich (9) zu definieren, in dem der Push-Dienst bereitgestellt werden soll, und um mithilfe der Bereitstellungseinheit den Push-Dienst an die mobile Einheit (3) bereitzustellen, wenn sich die mobile Einheit (3) in dem Dienste-Bereich (9) befindet oder in diesen gelangt ist.

9. Dienstbereitstellungseinheit nach Anspruch 7 oder 8, wobei die Bereitstellungseinheit eine Sendeeinrichtung, insbesondere eine Bluetooth-Sendeeinrichtung, umfasst.

10. Dienstbereitstellungseinheit nach Anspruch 7 oder 8, wobei die Positionsermittlungseinheit (6, 7) mehrere, verteilt angeordnete Positionsdetektoren (6) und eine Auswerteeinhcit (7) aufweist, um die Position der mobilen Einheit (3), insbesondere mithilfe eines Triangulationsverfahrens zu ermitteln.

11. Dienstbereitstellungssystem mit einer Dienstbereitstellungseinheit nach einem der Ansprüche 7 bis 9 und einer mobilen Einheit (3).

## Claims

1. Method for the selective provision of a push service within a coverage area of a base station (5), having the following steps:
- ascertainment of the position of a mobile unit (3) within the coverage area of the base station (5);
- provision of the push service for the mobile unit (3) on the basis of the ascertained position,
wherein the push service is taken as a basis for automatically setting up a call between the base station (5) and the mobile unit (3) or a call between two mobile units (3) in the coverage area.

2. Method according to Claim 1, wherein a service area (9) in which the push service is intended to be provided is defined within the coverage area, wherein the push service is provided for the mobile unit (3) when the mobile unit (3) is in the service area.

3. Method according to Claim 1, wherein a service area (9) in which the push service is intended to be provided is defined within the coverage area, wherein the push service is provided for the mobile unit (3) when the mobile unit (3) enters the service area (9).

4. Method according to one of Claims 1 to 3, wherein the push service is provided by setting up a data communication link, particularly a Bluetooth link, between the base station (5) and the mobile unit (3).

5. Method according to one of Claims 1 to 4, wherein the position is implemented using a triangulation method.

6. Method according to one of Claims 1 to 5, wherein the push service comprises at least one of the following services: a data link, a video and/or audio link, and a programme data link.

7. Service provision unit for the selective provision of a push service for a mobile unit (3), comprising:
- a base station (5) with a provision unit for the provision of the service within a coverage area;
- a position-finding unit (6, 7) for determining a position for the mobile unit (3) within the coverage area;
wherein the base station (5) is designed to provide the push service for the mobile unit (3) on the basis of the position of the latter, wherein the push service is designed to automatically set up a call between the base station (5) and the mobile unit (3) or a call between two mobile units (3) in the coverage area.

8. Service provision unit according to Claim 7, wherein a selection unit (8) is provided in the base station (5) in order to define a service area (9) in which the push service is intended to be provided and in order to use the provision unit to provide the push service for the mobile unit (3) when the mobile unit (3) is in or enters the service area (9).

9. Service provision unit according to Claim 7 or 8, wherein the provision unit comprises a transmission device, particularly a Bluetooth transmission device.

10. Service provision unit according to Claim 7 or 8, wherein the position-finding unit (6, 7) has a plurality of position detectors (6) in a distributed arrangement and an evaluation unit (7) in order to ascertain the position of the mobile unit (3), particularly using a triangulation method.

11. Service provision system having a service provision unit according to one of Claims 7 to 9 and a mobile unit (3).

## Revendications

1. Procédé de fourniture sélective d'un service Push à l'intérieur d'une zone de portée d'une station de base (5), comprenant les étapes suivantes :
- Détermination de la position d'une unité mobile (3) à l'intérieur d'une zone de portée de la station de base (5) ;
- Fourniture du service Push de l'unité mobile (3) en fonction de la position déterminée ;
une liaison de conversation entre la station de base (5) et l'unité mobile (3) ou une liaison de conversation entre deux unités mobiles (3) étant établie automatiquement dans la zone de portée sur la base du service Push.

2. Procédé selon la revendication 1, selon lequel une zone de service (9) dans laquelle le service Push doit être fourni est définie à l'intérieur de la zone de portée, le service Push étant fourni à l'unité mobile (3) lorsque l'unité mobile (3) se trouve dans la zone de service.

3. Procédé selon la revendication 1, selon lequel une zone de service (9) dans laquelle le service Push doit être fourni est définie à l'intérieur de la zone de portée, le service Push étant fourni à l'unité mobile (3) lorsque l'unité mobile (3) pénètre dans la zone de service (9).

4. Procédé selon l'une des revendications 1 à 3, selon lequel une liaison de communication de données, notamment une liaison Bluetooth, est établie entre la station de base (5) et l'unité mobile (3) pour la fourniture du service Push.

5. Procédé selon l'une des revendications 1 à 4, selon lequel la position est déterminée à l'aide d'un procédé par triangulation.

6. Procédé selon l'une des revendications 1 à 5, selon lequel le service Push comprend au moins l'un des services suivants : une liaison de données, une liaison vidéo et/ou audio et une liaison de données de programme.

7. Unité de fourniture de service pour la fourniture sélective d'un service Push à une unité mobile (3) comprenant :
- une station de base (5) munie d'une unité de fourniture pour fournir le service à l'intérieur d'une zone de portée ;
- une unité de détermination de la position (6, 7) pour déterminer une position de l'unité mobile (3) à
l'intérieur de la zone de portée ; la station de base (5) étant configurée pour fournir le service Push à l'unité mobile (3) en fonction de sa position, le service Push étant configuré pour établir automatiquement une liaison de conversation entre la station de base (5) et l'unité mobile (3) ou une liaison de conversation entre deux unités mobiles (3) dans la zone de portée.

8. Unité de fourniture de service selon la revendication 7, une unité de sélection (8) étant prévue dans la station de base (5) pour définir une zone de service (9) dans laquelle le service Push doit être fourni et pour fournir le service Push à l'unité mobile (3) à l'aide de l'unité de fourniture lorsque l'unité mobile (3) se trouve dans la zone de service (9).

9. Unité de fourniture de service selon la revendication 7 ou 8, l'unité de fourniture comprenant un dispositif d'émission, notamment un dispositif d'émission Bluetooth.

10. Unité de fourniture de service selon la revendication 7 ou 8, l'unité de détermination de la position (6, 7) présentant plusieurs détecteurs de position (6) et une unité d'interprétation (7) pour déterminer la position de l'unité mobile (3), notamment à l'aide d'un procédé par triangulation.

11. Système de fourniture de service comprenant une unité de fourniture de service selon l'une des revendications 7 à 9 et une unité mobile (3).
